# FASCICULE DE BREVET EUROPEEN

(11) **EP 3 325 776 B1**
(45) Date de publication et mention de la délivrance du brevet: **19.02.2020**
(21) Numéro de dépôt: 16756722.1
(22) Date de dépôt: 21.07.2016
(51) Int. Cl.: F01D 5/22, F01D 17/14, F01D 17/16, F02K 3/12, F02C 3/10, F02C 9/22

(54) **AERONEF COMPORTANT UNE TURBOMACHINE INTEGREE AU FUSELAGE ARRIERE A ALIMENTATION VARIABLE**
LUFTFAHRZEUG MIT EINEM IN DEN HECKRUMPF INTEGRIERTEN TURBINENMOTOR MIT VARIABLER VERSORGUNG
AIRCRAFT COMPRISING A TURBINE ENGINE INCORPORATED INTO THE REAR FUSELAGE WITH VARIABLE SUPPLY

(30) Priorité: 22.07.2015 FR 1556951; 22.07.2015 FR 1556950
(43) Date de publication de la demande: 30.05.2018
(73) Titulaire: Safran Aircraft Engines, 75015 Paris (FR)
(72) Inventeur: GALLET, François, 77550 Moissy-Cramayel Cedex (FR); TANTOT, Nicolas, Jérôme, Jean, 77550 Moissy-Cramayel Cedex (FR)
(74) Mandataire: Gevers & Orès
(86) Numéro de dépôt international: PCT/FR2016/051882
(87) Numéro de publication internationale: WO 2017/013360

(56) Documents cités:
- FR-A- 1 555 756
- FR-A1- 2 997 681
- US-A- 2 601 194
- US-A- 4 080 785

## Description

### Domaine de l'invention et état de la technique :

La présente invention se rapporte au domaine des aéronefs tels que des avions, notamment civils, propulsés par une turbomachine intégrée dans le prolongement du fuselage, en aval de celui-ci. Elle concerne plus particulièrement les moyens pour adapter la turbomachine dans ce type d'architecture à des situations particulières de fonctionnement qui doivent être prises en compte pour des questions de sécurité.

Il a été proposé dans la demande de brevet FR-A1-2 997 681, une nouvelle architecture d'aéronef permettant de réduire les nuisances sonores et la consommation de carburant de l'aéronef en limitant la traînée aérodynamique par absorption de la couche limite.

Dans une telle architecture, un aéronef est propulsé par une turbomachine à soufflantes contrarotatives carénées, la turbomachine étant intégrée à l'arrière du fuselage de l'aéronef. Généralement, la turbomachine comprend au moins deux générateurs de gaz qui alimentent une turbine de puissance ayant deux rotors contrarotatifs pour entraîner deux soufflantes disposées en aval des générateurs de gaz. Les générateurs de gaz ont des entrées d'air latérales distinctes pour alimenter chacun d'eux.

En aval des générateurs de gaz, les soufflantes sont disposées dans le prolongement du fuselage de l'aéronef et généralement alimentées par une couronne annulaire reliée à ce dernier, de manière à absorber une partie au moins de la couche limite formée autour du fuselage. Le diamètre des soufflantes est de l'ordre de celui du fuselage dans sa plus grande section. La vitesse de rotation des soufflantes est généralement plus basse que pour des turbomachines classiques, notamment pour que la vitesse en tête d'aube, dont le rayon est important, soit subsonique.

La turbine de puissance est donc dimensionnée pour fonctionner en étant alimentée par l'ensemble des générateurs de gaz. Dans le cas où l'un des générateurs de gaz est éteint pour une cause volontaire ou accidentelle, le débit entrant dans la turbine est sensiblement diminué. Par exemple, il est pratiquement divisé par deux dans le cas de deux générateurs de gaz, un seul fonctionnant. La section de passage de la veine de la turbine est alors trop grande pour le débit considéré et la vitesse de l'écoulement y est fortement diminuée. La puissance fournie par la turbine, dépendant du débit et de la vitesse du flux qui la traverse, devient trop faible et est, par exemple, nettement inférieure à celle obtenue pour un aéronef avec deux turbomachines séparées lorsqu'on arrête l'une d'elles.

Par ailleurs, dans le concept d'aéronef envisagé, la position et la forme des entrées d'air peut conduire à alimenter les générateurs de gaz avec un écoulement comportant un fort niveau de distorsion, ce qui rend délicate la stabilité de leur compresseur basse pression. En particulier, des variations trop brutales de la section aérodynamique de passage de la turbine de puissance influent sensiblement sur l'opérabilité du compresseur du générateur de gaz, et peuvent entraîner des risques de pompage dans le ou les générateurs de gaz en fonctionnement.

La présente invention a notamment pour objectif d'adapter la turbine au cas où l'un des générateurs de gaz serait éteint et qu'il en reste au moins un en fonctionnement.

### Exposé de l'invention :

A cet effet, l'invention concerne un aéronef propulsé par une turbomachine à soufflantes contrarotatives, la turbomachine étant intégrée à l'arrière d'un fuselage de l'aéronef, dans le prolongement de celui-ci et comprenant au moins deux générateurs de gaz qui alimentent, par une veine centrale commune, une turbine de puissance, la turbine comportant deux rotors contrarotatifs pour entraîner deux soufflantes disposées en aval des générateurs de gaz, l'aéronef comportant des moyens agencés pour séparer le flux de gaz dans la turbine de puissance en au moins deux veines concentriques et un dispositif comprenant des premiers moyens de distribution du flux de gaz entre ces deux veines à partir de la veine centrale, lesdits premiers moyens de distribution étant configurés pour pouvoir ouvrir ou fermer l'alimentation d'au moins une première veine, dite veine occultable, parmi les au moins deux veines concentriques de la turbine de puissance.

Ladite au moins une veine occultable a de préférence une section de passage sensiblement égale à la section de passage totale dans la turbine divisée par le nombre de générateurs de gaz. De cette façon, lorsqu'un générateur de gaz est arrêté et que les autres générateurs de gaz fonctionnent, les premiers moyens de distribution du dispositif permet de conserver une turbine contrarotative en mode dégradée où seule la section de chaque aube présente dans la ou les veines non occultées est soumise au flux. Comme la section globale de passage de la ou les veines non occultées correspond au débit fourni par le ou les générateurs de gaz restant en fonctionnement, la vitesse du flux auquel sont soumises les aubes est sensiblement la même qu'en fonctionnement normal. La puissance fournie est diminuée à cause du débit moindre mais il ne s'y ajoute pas l'effet d'une chute sensible de la vitesse de l'écoulement incident sur les aubes.

Par ailleurs, le fait que les premiers moyens de distribution soient dans la veine commune centrale entraîne qu'il n'y a pas de veine dédiée à l'un ou l'autre des générateurs de gaz, leurs flux se mélangent dans la veine centrale. Les premiers moyens de distribution permettent donc d'adapter la section de passage des gaz dans la turbine de puissance aux générateurs de gaz restant en fonctionnement, indépendamment du fait de savoir lequel est arrêté.

De préférence, chaque rotor de la turbine de puissance comportant au moins une couronne d'aubes, les moyens de séparation du flux en veines concentriques comportent des nageoires s'étendant circonférentiellement entre les aubes de chaque couronne, à un rayon intermédiaire entre les extrémités radiales de ces aubes.

Avantageusement, les premiers moyens de distribution comportent des passages du flux de gaz dédiés à l'alimentation en flux de gaz venant de la veine centrale de chacune des au moins deux veines concentriques de la turbine de puissance et solidaires d'une structure fixe de la turbomachine.

Préférentiellement, ladite veine concentrique radialement la plus interne des au moins deux veines concentriques dans la turbine de puissance est la veine occultable. C'est donc préférentiellement la partie externe des aubes qui reste soumise à un flux incident lorsque la turbine fonctionne en mode dégradé.

Selon un mode de réalisation préféré, ladite au moins une veine occultable comprend une ouverture d'entrée dans la veine centrale définie entre deux bords suivant sensiblement par une même courbe autour d'un axe de la turbomachine et décalés suivant ledit axe.

De préférence, les premiers moyens de distribution comportent une pièce mobile en translation suivant un axe de la turbomachine et sont configurés de telle sorte que ladite pièce ouvre ou ferme la section d'entrée de ladite au moins une veine occultable de la turbine de puissance suivant sa position en translation. Ainsi, n'ayant pas de pièce tournante, les premiers moyens de distribution peuvent avoir une conception simple, avec des actionneurs que l'on peut reporter dans le fuselage, où la problématique d'encombrement est moins sévère.

De préférence, l'aéronef comporte des moyens configurés pour alimenter avec un flux d'air de ventilation ladite au moins une veine occultable de la turbine de puissance lorsque son alimentation en gaz par la veine centrale est fermée.

En effet, les moyens de séparation des veines concentriques de la turbine de puissance ne sont pas parfaits. Ils peuvent laisser passer un courant de fuite. Le flux de ventilation purge la veine occultable lorsqu'elle est fermée et contrecarre la tendance des gaz primaires à s'échapper dans la veine occultable par les interstices entre les nageoires.

Avantageusement, l'aéronef comprend des moyens configurés pour fermer la sortie de ladite au moins une veine occultable de la turbine de puissance lorsque son alimentation en gaz par la veine centrale est fermée. Cela empêche que le flux de ventilation ne soit aspiré par la rotation des aubes de la turbine. Il ne peut s'échapper que par les interstices entre les nageoires et remplit ainsi son effet de purge.

Avantageusement, le pilotage des moyens de fermeture en sortie de ladite au moins une veine occultable est fonction de la différence entre une force de rappel élastique et une pression des gaz en sortie de ladite au moins une veine occultable. En effet, la pression exercée par le flux de ventilation est beaucoup plus faible que celle exercée par le flux primaire lorsque la veine est ouverte. Il est donc facile de régler la force de rappel pour que les moyens se ferment lorsqu'on ferme l'alimentation de la veine et qu'ils s'ouvrent sans gêner le fonctionnement de la turbine lorsque l'alimentation de la veine en flux primaire est effective.

Avantageusement, des bras de soutien d'un carter aval, tournant avec un rotor de la turbine de puissance, répartis en couronne à la sortie de ladite turbine, supportent lesdits moyens de fermeture.

Dans ce cas, lesdits moyens de fermeture peuvent comporter des lames souples, chacune étant fixée à un bras de soutien dans la zone du bord d'attaque et s'étendant dans la direction circonférentielle jusqu'à un bras de soutien voisin lorsqu'aucune force ne s'exerce dessus suivant une direction provenant de ladite au moins une veine occultable.

Enfin, l'invention concerne plus particulièrement un aéronef dans lequel les générateurs sont alimentés par des entrées d'air distinctes, disposées en périphérie du fuselage de l'aéronef.

Selon une autre caractéristique de l'invention, le dispositif comprend des deuxièmes moyens de distribution comportant une couronne d'aubes de stator, sensiblement radiales, à calage variable.

Dans ce cas, la fermeture de la section de passage du flux de gaz à sa valeur minimale se fait en augmentant fortement le calage des aubes de stator, appelées également dans la suite aubes de distributeur. Par contre, l'optimisation du débit vers la turbine de puissance pour l'adapter au point de fonctionnement du compresseur du ou des générateurs de gaz en opération, se fait avec de très faibles variations d'angle de calage, de l'ordre de quelque dixièmes de degré.

En mode de fonctionnement nominal de la turbomachine, les deuxièmes moyens de distribution permettent, via une optimisation fine de l'angle de calage des aubes, de l'ordre de quelques dixièmes de degrés, de positionner le point de fonctionnement du compresseur du générateur de gaz dans une zone d'opérabilité saine, dépendante des conditions de vol et du niveau de distorsion.

En cas de panne, les deuxièmes moyens de distribution permettent, via une fermeture rapide mais progressive, correspondant à une amplitude de quelques degrés pour la variation de l'angle de calage des aubes, de lisser la transition de section de passage vers la turbine de puissance et d'assurer une migration maîtrisée du point de fonctionnement du compresseur du générateur de gaz non arrêté, et de minimiser le risque de pompage.

De manière avantageuse, le calage variable des aubes peut être individuel. Cela permet de corriger des distorsions de flux en entrée de la turbine de puissance qui peuvent être importantes notamment lorsqu'un seul des générateurs de gaz reste en fonctionnement.

Selon une autre caractéristique de l'invention, des moyens d'asservissement des deuxièmes moyens de distribution sont configurés pour faire varier la section de passage en fonction des conditions d'entrée du ou des générateurs de gaz en fonctionnement.

Lorsque le compresseur des générateurs de gaz est soumis à de fortes distorsions de son alimentation en air, même en fonctionnement nominal, notamment pour une turbomachine dont les générateurs de gaz sont à l'intérieur du fuselage avec des entrées d'air fortement coudées, ces moyens d'asservissement peuvent pallier à l'absence de dispositif de contrôle de l'opérabilité des compresseurs. Dans ce cas, une optimisation jouant sur de très faibles variations de section permet de positionner le point de fonctionnement du compresseur du générateur de gaz dans une zone d'opérabilité saine.

Selon une autre caractéristique de l'invention, les deuxièmes moyens de distribution sont agencés pour faire varier la section de passage du flux des gaz jusqu'à une valeur minimale sensiblement égale ou inférieure à la section de passage dans une deuxième veine des au moins deux veines concentriques.

De la sorte, la fermeture rapide des deuxièmes moyens permet de lisser la transition de section de passage avant de fermer les deuxièmes moyens de distribution pour obstruer la première veine. Une réouverture, au moins partielle, des deuxièmes moyens de distribution peut être programmée lors de la fermeture des premiers moyens de distribution pour maintenir un débit de gaz adapté au fonctionnement du générateur de gaz restant. La réouverture des deuxièmes moyens de distribution permet de faire fonctionner la turbine de puissance sans entraîner de fortes distorsions dans la veine concentrique ouverte.

Selon une autre caractéristique, les deuxièmes moyens de distribution sont situés en aval des premiers moyens de distribution suivant l'écoulement des gaz.

Selon encore une autre caractéristique, la première veine desdites au moins deux veines concentriques est radialement interne par rapport à la deuxième veine.

L'invention pourrait également concerner une turbomachine comprenant deux générateurs de gaz configurés pour générer un flux primaire qui est délivré par une veine centrale à une turbine de puissance, ladite turbine de puissance comportant au moins un rotor entraînant au moins un rotor de soufflante, la turbomachine comportant, entre la veine centrale et la turbine de puissance, des moyens de distribution configurés pour faire varier en fonction du temps et transversalement autour d'un axe de la turbomachine, d'une part une incidence du flux primaire, de manière à adapter ladite incidence au fonctionnement de la turbine de puissance, d'autre part une section de passage du flux primaire, de manière à adapter ladite section de passage à des évolutions d'un état de fonctionnement desdits au moins deux générateurs de gaz impactant un débit du flux primaire.

Les moyens de distribution comprennent les deuxièmes moyens de distribution.

Le terme de variation de manière transversale autour de l'axe s'entend ici par le fait que la section de passage varie de manière sensiblement uniforme et proportionnelle le long d'un rayon partant de l'axe.

De cette manière, en plus du fait que ces moyens peuvent jouer le rôle de distributeur habituel en entrée de la turbine, les évolutions d'un état de fonctionnement des générateurs de gaz concernant entre autres le cas d'une extinction d'un générateur de gaz en conservant au moins un générateur de gaz délivrant le flux primaire, la section de passage peut être progressivement adaptée, avec lesdits deuxièmes moyens de distribution, au fonctionnement du au moins un générateur de gaz restant. Lesdits deuxièmes moyens de distribution, par une fermeture rapide mais progressive permettent de lisser la transition de section de passage des gaz ressentie par le au moins un générateur de gaz restant en fonctionnement. Cette progressivité permet une migration maîtrisée du point de fonctionnement du compresseur dudit au moins un générateur de gaz, et ainsi de minimiser les risques de pompage.

L'invention concerne également un procédé, selon la revendication 16, de gestion de panne d'une turbomachine d'un aéronef, pour le passage d'un fonctionnement avec deux générateurs de gaz à un seul, présentant l'une quelconque des caractéristiques précédentes comprenant:
- une étape a) de fermeture, de préférence rapide mais progressive, des deuxièmes moyens de distribution, de manière à adapter le débit dans la turbine de puissance à l'unique générateur de gaz en fonctionnement, et
- une étape b) consistant à fermer les premiers moyens de distribution tout en ré-ouvrant les deuxièmes moyens de distribution, de manière à faire fonctionner la turbine de puissance avec une seule veine concentrique tout en maintenant le débit adapté au fonctionnement d'un seul générateur de gaz.

L'invention concerne encore un procédé, selon la revendication 17, de pilotage d'une turbomachine d'un aéronef présentant l'une quelconque des caractéristiques susmentionnées. Selon le procédé, la position des deuxièmes moyens de distribution est pilotée en fonction de paramètres influençant l'opérabilité des compresseurs basse pression des générateurs de gaz.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
La figure 1 présente une vue schématique en coupe longitudinale de la partie arrière d'un aéronef équipé d'une turbomachine selon l'invention ;
La figure 2 présente une vue schématique d'une demi-coupe longitudinale de la turbomachine selon l'invention au niveau de la turbine de puissance dans un mode de fonctionnement normal ;
La figure 3 présente une vue schématique de dessus d'une demi-coupe longitudinale de la turbomachine selon l'invention au niveau de la turbine de puissance dans un mode de fonctionnement dégradé ;
La figure 4 présente une vue schématique en coupe longitudinale d'un mode de réalisation de premiers moyens de distribution réglables de l'écoulement primaire à l'entrée de la turbine de puissance ;
Les figures 5a et 5b présentent schématiquement une vue circonférentielle déployée entre deux bras support adjacents, d'un moyen de blocage de l'écoulement primaire en sortie d'une veine de la turbine de puissance dans deux situations de fonctionnement ;
La figure 6 présente une vue schématique en coupe longitudinale de la partie de la turbomachine suivant un autre aspect de l'invention ;
La figure 7 présente une vue schématique d'une demi-coupe longitudinale de la turbomachine selon l'invention au niveau de la turbine de puissance dans un autre mode de fonctionnement ;
La figure 8 présente une vue schématique de dessus d'une demi-coupe longitudinale de la turbomachine selon l'invention au niveau de la turbine de puissance dans un autre mode de fonctionnement ; et
La figure 9 présente une vue schématique en coupe longitudinale d'un mode de réalisation de deuxièmes moyens de distribution réglable de l'écoulement primaire à l'entrée de la turbine de puissance.

### Description d'un mode de réalisation :

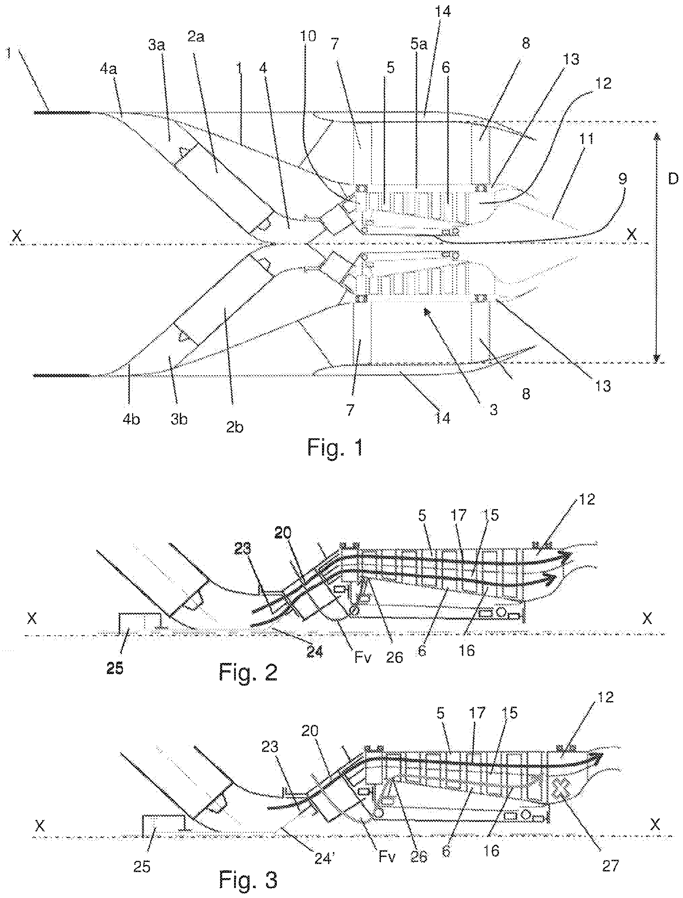

L'invention s'applique en particulier, sans que ce soit limitatif, à un aéronef tel qu'un avion comportant une turbomachine du type de celle représentée sur la figure 1.

Comme représenté sur la figure 1, la turbomachine est centrée sur l'axe longitudinal XX du fuselage 1 de l'aéronef. Cette turbomachine comprend, d'amont en aval dans le sens d'écoulement des gaz, deux générateurs de gaz distincts 2a, 2b alimentant simultanément une unique turbine de puissance 3. La turbomachine est installée à l'extrémité aval du fuselage 1 de l'aéronef.

Dans ce document, les dénominations axiales et radiales se réfèrent à l'axe XX du fuselage et de la turbomachine. De même, les termes amont et aval se réfèrent à la direction de l'écoulement principal le long de cet axe.

De façon connue en soi, chaque générateur de gaz 2a, 2b comprend au moins un compresseur, une chambre de combustion et une turbine haute pression (non représentés sur les figures).

Chaque générateur de gaz 2a, 2b est logé à l'intérieur d'une veine d'écoulement primaire 3a, 3b. Des entrées d'air distinctes 4a, 4b sont prévues pour ces veines 3a, 3b afin d'alimenter chaque générateur de gaz 2a, 2b. Sur l'exemple présenté, les entrées d'air 4a, 4b sont reliées au fuselage 1 de l'aéronef, en amont des générateurs de gaz 2a, 2b, et leur paroi interne est directement intégrée au fuselage 1. Elles absorbent ainsi une partie de la couche limite formée autour du fuselage 1 de l'aéronef. Dans une autre configuration, non représentée, les entrées d'air latérales alimentant chacun des générateurs de gaz peuvent être, au contraire, écartées du fuselage 1 de l'aéronef, de manière à minimiser ce phénomène d'absorption de la couche limite et à faciliter le fonctionnement des générateurs de gaz. Il est également envisageable d'utiliser plus de deux générateurs de gaz, par exemple trois pour alimenter la turbine de puissance 3.

De préférence, les deux veines d'écoulement primaires 3a, 3b des générateurs de gaz 2a, 2b convergent sur l'axe longitudinal XX et forment entre elles un V ouvert vers l'amont, dont l'angle d'ouverture est de préférence compris entre 80° et 120°.

Les deux veines d'écoulement primaires 3a, 3b des générateurs de gaz 2a, 2b convergent dans une veine primaire centrale 4 qui alimente la turbine de puissance 3. Un mélangeur (non représenté sur les figures) est de préférence positionné au niveau de la zone de convergence des deux veines 3a, 3b, logeant les générateurs de gaz 2a, 2b. Ce mélangeur a pour fonction de mélanger les flux gazeux issus des deux générateurs de gaz 2a, 2b pour créer un flux gazeux unique homogène en sortie de la veine centrale primaire 4.

La turbine de puissance 3, qui est alimentée par ce flux primaire en sortie de la veine centrale 4, est munie de deux rotors 5, 6 de turbine contrarotatifs pour entrainer de façon contrarotative deux soufflantes 7, 8. En d'autres termes, la veine centrale 4 est agencée en amont de la turbine de puissance. La veine centrale présente une section circulaire. Ces rotors de turbine 5, 6 sont coaxiaux et centrés sur l'axe longitudinal XX. Ils tournent autour d'un carter central 9 fixé à la structure de l'aéronef.

Ici, un premier rotor 5 de turbine correspond à des aubes liées à un corps tubulaire 5a séparant la veine d'écoulement primaire, dans la turbine de puissance 3, de la veine d'écoulement secondaire, dans laquelle se trouvent les soufflantes 7,8. Les aubes et le corps tubulaire 5a du premier rotor 5 sont reliées aux paliers de support du rotor 5 sur le carter intérieur 9 par des bras support 10 qui traversent la veine primaire en amont de la turbine de puissance 3.

Sur le même exemple, le deuxième rotor 6 correspond à des aubes liées à une paroi radialement intérieure de la veine primaire dans la turbine 3 et intercalées longitudinalement entre les aubes du premier rotor 5.

En aval de la turbine de puissance 3, la partie radialement interne du deuxième rotor 6 se prolonge par un corps central 11. D'autre part, elle est reliée, par des bras support 12, à un anneau 13 de support des aubes de la soufflante aval 8. De plus, cet anneau 13 prolonge le corps tubulaire 5a du premier rotor 5 et comporte une extension vers l'arrière, de façon à former, avec le corps central 11, une tuyère d'éjection primaire, en sortie de la turbine de puissance 3.

Sur l'exemple présenté, une première soufflante 7, amont, est positionnée au niveau de l'entrée de la turbine de puissance 3. Elle est reliée au premier rotor 5 de turbine de puissance au niveau des bras 10 qui soutiennent en amont le corps extérieur cylindrique 5a. Cette soufflante amont 7 tourne donc à la même vitesse que le premier rotor 5 de la turbine de puissance 3.

Sur le même exemple, la deuxième soufflante 8, aval, est positionnée au niveau de la sortie de la turbine de puissance 3. Elle est reliée au deuxième rotor 6 de turbine de puissance au niveau de l'anneau de support 13 et des bras 12 qui le soutiennent. Cette soufflante aval 8 tourne donc à la même vitesse que le deuxième rotor 6 de la turbine de puissance 3.

Les deux soufflantes 7, 8 sont carénées par une nacelle 14 fixée à la structure de l'aéronef. Cette nacelle 14 est notamment fixée, ici, à l'empennage vertical de l'aéronef, non représenté sur les figures. Les soufflantes présentent un diamètre externe D qui correspond sensiblement au diamètre externe le plus élevé du fuselage 1 de l'aéronef.

L'air entrant dans les soufflantes 7, 8 étant en partie composé de la couche limite du fuselage de l'aéronef, la vitesse en entrée est peu élevée par rapport à des soufflantes classiques de turbomachine et la vitesse en sortie est également plus basse à taux de compression identique, ce qui améliore les performances propulsives et acoustiques de ces soufflantes. Par ailleurs, l'important diamètre externe D des soufflantes 7, 8 entraîne que leur vitesse de rotation, comme celle des rotors 5, 6 de la turbine de puissance 3, restera également peu élevée par rapport à une turbomachine classique.

Selon un premier aspect de l'invention, en référence à la figure 2, les aubes de turbine des deux rotors 5, 6 ainsi que les bras support 10, 12 de ces rotors qui traversent l'écoulement primaire, sont équipés de nageoires 15 ayant une extension circonférentielle, sensiblement à mi chemin des extrémités radiales de la veine d'écoulement primaire.

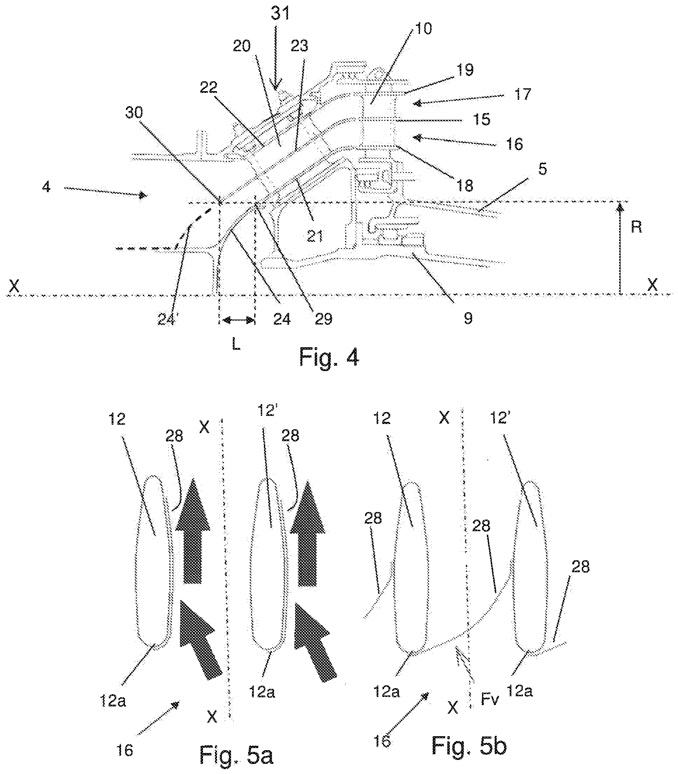

La forme des nageoires 15 permet de séparer la veine de l'écoulement primaire en une veine radialement interne 16 et une veine radialement externe 17, les deux veines étant de révolution autour de l'axe longitudinal XX. La figure 4 permet de se représenter la forme de ces nageoires 15 sur un bras support 10 du premier rotor 5. De telles nageoires 15 forment ici la séparation entre les veines interne 16 et externe 17, de manière continue dans le sens circonférentiel mais laissent longitudinalement un espace entre elles, de manière à permettre la rotation différentielle des étages successifs de la turbine. En cela, elles sont comparables aux viroles 18, 19, qui sont situées au pied et au bout des aubes ou des bras dans la turbine 3 et qui reconstituent les parois interne et externe du passage de l'écoulement primaire dans la turbine de puissance 3. Ces viroles 18, 19, ainsi que la nageoire 15 sont représentées sur le bras support 10 du premier rotor 5 dans la figure 4.

En référence à la figure 4, un dispositif est mis en place pour distribuer l'écoulement primaire venant de la veine centrale 4 entre les veines interne 16 et externe 17 de la turbine de puissance 3.

Ici, le dispositif comprend des premiers moyens de distribution 31 fixés par sa périphérie externe à une structure de la turbomachine ou de l'aéronef et par sa périphérie interne au carter central 9 relient la veine centrale 4 à la turbine de puissance. Les premiers moyens de distribution 31 comprennent une couronne de bras structuraux 20, inclinés par rapport à l'axe longitudinal XX, permettant de maintenir le carter central 9 de la turbine de puissance 3 à la structure fixe de la turbomachine en amont. La direction perpendiculaire à ces bras structuraux définit un cône de divergence allant de la veine centrale 4 aux veines 16, 17 de la turbine de puissance 3.

Cette couronne de bras structuraux 20 permet de tenir une série de viroles tronconiques 21, 22, 23 s'évasant vers l'arrière. Ces bras structuraux 20 sont par exemple représentés partiellement en traits discontinus sur la figure 4.

Une virole tronconique externe 22 forme le raccord entre la paroi radiale extérieure de la veine centrale 4 et la paroi radiale extérieure de la veine externe 17 de la turbine 3. Une virole tronconique interne 21 forme, partant d'un bord amont 29, ici sensiblement circulaire et ayant un rayon déterminé R, se raccorde à la paroi radialement interne de la veine interne 16 de la turbine 3. Une virole tronconique intermédiaire 23 est également fixée sur les bras support 20 de manière à séparer la veine entre les deux viroles 21, 22 d'extrémité en deux veines de section sensiblement égale et à se raccorder, dans sa partie aval, aux nageoires 15 sur le bras 10 du premier rotor 5. En particulier, la virole intermédiaire 23 est installée radialement entre les viroles tronconiques externe 22 et interne 21. De cette manière, les viroles tronconiques 21, 22, 23 prolongent vers l'amont les veines interne 16 et externe 17 de la turbine de puissance 3.

De manière préférée, la virole tronconique intermédiaire 23 se prolonge vers l'avant, dans la veine centrale 4, suivant une inclinaison constante, jusqu'à un bord amont 30 situé à une distance axiale L en amont du bord amont 29 de la virole interne 21. Le bord amont 30 de la virole intermédiaire 23 est sensiblement circulaire, avec un rayon R sensiblement égal à celui du bord amont 29 de la virole interne 21.

Par ailleurs, les premiers moyens de distribution 31 comprennent une pièce de révolution 24 en forme de dôme. La pièce de révolution 24 ferme la veine centrale 4 jusqu'au rayon R déterminé auquel s'arrête la virole tronconique interne 21. En correspondance avec cette caractéristique, la pièce de révolution 24 est mobile en translation le long de l'axe longitudinal XX. Elle peut être bougée par des actionneurs 25, représentés sur les figures 2 et 3 et qui peuvent se trouver dans le fuselage 1 de l'aéronef en avant de la turbomachine. Elle peut être positionnée, comme, c'est illustré sur la figure 4, soit dans une position où elle se raccorde avec le bord amont 29 de la virole interne 21, soit dans une position où elle se raccorde avec le bord amont 30 de la virole intermédiaire 23.

En référence à la figure 2, lorsque la pièce 24 mobile est positionnée vers l'arrière par les actionneurs 25, le flux d'air primaire venant de la veine centrale 4 se sépare, ainsi que c'est indiqué par les deux flèches provenant de la veine centrale, en deux flux répartis entre les veines interne 16 et externe 17 de la turbine de puissance 3. Cela correspond au cas, où le flux venant de la veine centrale 4 est le mélange de sortie des deux générateurs de gaz 2a, 2b en fonctionnement.

En référence à la figure 3, lorsque la pièce 24 mobile est positionnée vers l'avant, dans la position 24', par les actionneurs 25, le flux d'air primaire venant de la veine centrale 4 ne passe que dans la veine externe 17 de la turbine de puissance 3, ainsi que c'est indiqué par la flèche provenant de la veine centrale 4. Cela correspond au cas, où le flux venant de la veine centrale ne provient que d'un générateur de gaz, 2a ou 2b.

Selon un autre aspect de l'invention, la turbine de puissance 3 est agencée pour introduire un flux d'air de ventilation Fv dans la veine interne 16 lorsque son entrée est fermée. En référence à la figure 3, ce flux d'air de ventilation Fv peut être prélevé en amont de la turbine 3 par une entrée d'air non représentée et être acheminé vers une arrivée 26 dans la partie amont la veine interne 16 en passant par les bras 20 structuraux de support du carter central 9. Comme c'est représenté par la flèche sur la figure 2, cette arrivée 26 d'air de ventilation dans la veine interne 16 est fermée lorsque la veine interne 16 est en communication avec la veine primaire centrale 4.

Par ailleurs, cette arrivée d'air de ventilation 26 peut être commandée par un système de clapet qui l'ouvre ou la ferme automatiquement, en fonction de la pression appliquée par l'écoulement primaire, suivant qu'il passe ou non dans la veine interne 16.

De préférence, lorsque l'entrée d'air primaire dans la veine interne 16 de la turbine 3 est fermée, des moyens de fermeture 27 de la sortie de la veine interne 16 sont actionnés. De cette manière, l'air de ventilation ne peut s'échapper que via l'espace situé entre les nageoires 15, et peut ainsi remplir sa fonction de purge.

Bien sûr, ces moyens 27 doivent être ouverts lorsque la turbine de puissance 3 fonctionne avec ses deux veines 16, 17 traversées par le flux d'écoulement primaire.

Un exemple non limitatif de dispositif permettant de réaliser ces moyens de fermeture 27 de sorte qu'ils se ferment et s'ouvrent automatiquement en fonction, respectivement, de la fermeture et de l'ouverture en amont de la veine interne 16, est décrit sur les figures 5a et 5b.

En référence à la figure 5a, des lames souples 28 de la hauteur de l'extension radiale de la veine interne 16 sont fixées à chaque bras support 12 du deuxième rotor 6, à l'arrière de la turbine 3. Ces lames souples 28 ont une longueur suivant l'axe longitudinal XX du même ordre que celle des bras 12 et d'une valeur supérieure à l'écartement entre deux bras 12 successifs dans le sens circonférentiel. Elles sont placées sur la face intrados de chaque bras 12 par rapport au sens de rotation du flux primaire, ainsi qu'il est représenté par des flèches en traits épais sur la figure 5a, et elles sont fixées à chaque bras 12 au niveau de son bord d'attaque 12a.

Comme c'est représenté sur la figure 5a, lorsque la veine interne 16 est ouverte et que le flux primaire, représenté par des flèches en traits épais, arrive sur ces lames 28, ce flux possède suffisamment d'énergie pour plaquer les lames 28 contre les bras 12 du deuxième rotor 6, et donc libérer l'espace nécessaire à son passage.

Par contre, en référence à la figure 5b, lorsque la veine interne 16 est fermée et que c'est l'air de ventilation, représenté par des flèches en traits fins, qui arrive sur ces lames 28, cet air n'a pas assez de pression pour pousser ces lames 28. Ces lames 28 se détendent donc à partir du bord d'attaque 12a de chaque bras 12 et leur extrémité arrière vient s'appuyer contre le bras 12 adjacent. Elles forment donc une obstruction de la sortie aval de la veine interne 16 et forcent cet air de ventilation à s'échapper par les espaces situés entre les nageoires 15, vers la veine externe 17, dans la turbine de puissance 3.

Ainsi, une méthode pour passer, sur un tel aéronef, en fonctionnement de la turbomachine avec un seul générateur de gaz, par exemple en cas de perte accidentelle de l'un deux, peut comporter essentiellement, du moins en ce qui concerne la turbine de puissance 3, une commande de déplacement de la pièce 24 mobile vers l'avant, en position 24', pour fermer l'entrée d'écoulement primaire dans la veine interne 16. Dans ce cas, l'écoulement d'air de ventilation Fv se met en place, avec l'ouverture de l'arrivée d'air 26 et l'obstruction de la sortie de la veine interne 16 par les moyens de fermeture 27, qui sont commandés automatiquement par les conditions d'écoulement.

Selon un deuxième aspect de l'invention, le dispositif comprend des deuxièmes moyens de distribution 32 qui comportent une couronne d'aubes de stator 33 à calage variable et sensiblement radiales, s'étendant radialement entre la virole interne 21 et la virole externe 22. Cette couronne d'aubes à calage variable 33, ou aubes de distributeur 33, joue un rôle de distributeur en entrée des rotors de la turbine de puissance 3. En particulier, les aubes de distributeur 33 sont disposées en entrée de la turbine de puissance et pivotent chacune autour d'un axe les traversant et étant sensiblement perpendiculaire, dans un plan méridien, aux viroles interne 21 et externes 22. Le profil des aubes de distributeur 33 ainsi que leur angle de calage sont adaptés de manière à optimiser le fonctionnement de la turbomachine.

Il est connu par exemple du document FR-A-1 555 756, des aubes de stator à calage variable disposées dans un conduit dans lequel sont installées des turbines de puissance et devant un ventilateur. Cependant, dans ce document d'art antérieur, l'angle des aubes est réglé de façon à adapter le point de fonctionnement du ventilateur et du rotor de la turbine en fonctionnement normal. En d'autres termes, le calage de ces aubes est opéré en fonction de la quantité d'énergie nécessaire et demandée par les rotors de turbine, seule l'incidence du flux primaire étant modifiée.

A l'inverse dans la présente invention, comme mentionné précédemment et comme nous le verrons dans la suite de la description, les angles des aubes de distributeur 33 sont adaptés de manière à optimiser le point de fonctionnement de la soufflante en fonction des régimes moteurs, et d'autre part de manière à permettre la fermeture rapide mais progressive de la section d'entrée de la turbine de puissance dans un environnement de forte distorsion. Cela permet une migration progressive du point de fonctionnement du compresseur basse pression du générateur de gaz encore opérationnel (on palie l'arrêt d'un des générateurs de gaz). Les conditions aérodynamiques sont rétablies (au niveau de l'étage d'aube à calage variable).

De manière plus précise, selon le deuxième aspect de l'invention, l'angle de calage des aubes de distributeur 33 peut être réglé entre des valeurs relativement faibles, de l'ordre de quelques dixièmes de degrés, correspondant à une optimisation en fonctionnement normal de la turbomachine, des valeurs importantes, correspondant au fait de fermer la section de passage des gaz pour ne laisser passer, avantageusement, qu'un débit sensiblement égal à la moitié du débit nominal, correspondant au fonctionnement d'un seul générateur de gaz.

En fonction de leur calage, les aubes du distributeur 33 remplissent donc deux fonctions, une première fonction de distributeur consistant à adapter l'incidence du flux primaire avant qu'il ne passe entre les aubes du premier étage de rotor dans la turbine de puissance, et une deuxième fonction consistant à faire varier transversalement la section de passage du flux primaire vers la turbine. Par variation transversale de la section de passage, on entend ici le fait que la variation est sensiblement homogène en proportion le long d'un rayon.

En ce qui concerne l'interaction avec la virole intermédiaire 23, les aubes de distributeur 33 peuvent être séparées en deux demi volets, entraînés par le même axe de rotation mais s'étendant, pour l'un entre la virole interne 21 et la virole intermédiaire 23, pour l'autre entre la virole intermédiaire 23 et la virole externe 22.

Dans une variante non représentée sur les figures, les aubes de distributeur 33 peuvent être positionnées en fin de la veine centrale 4 mais en amont des viroles, notamment du dispositif décrit ci-après pour contrôler le passage dans les veines concentriques 16, 17 de la turbine de puissance 3. Dans ce cas, les aubes de distributeur 33 peuvent être réalisées d'un seul tenant car elles n'ont pas à traverser la virole intermédiaire 23.

Par ailleurs, les mouvements des aubes de distributeur 33 sont commandés par des actionneurs, non représentés, permettant de faire varier l'angle de calage de manière continue mais rapide entre ses valeurs extrêmes.

De préférence, la turbomachine comporte également des moyens d'asservissement non représentés pour optimiser l'angle de calage des aubes de distributeur 33 au point de fonctionnement du compresseur basse pression des générateurs de gaz 2a, 2b. Ces moyens d'asservissement peuvent comporter des capteurs de paramètres de fonctionnement du compresseur basse pression et de paramètres de l'écoulement après le mélangeur, et un calculateur avec des algorithmes conçus pour envoyer les commandes appropriées aux actionneurs des aubes de distributeur 33.

Des méthodes de pilotage de la turbomachine ainsi équipée vont maintenant être brièvement décrites.

Lorsque la turbomachine fonctionne de façon nominale avec ses deux générateurs de gaz en opération, les actionneurs des aubes de distributeur 33, sous le contrôle des moyens d'asservissement, peuvent faire varier légèrement, de l'ordre de quelques dixièmes de degré, l'angle de calage des aubes de distributeur 33. Cela permet d'adapter le flux entrant dans la turbomachine au fonctionnement des compresseurs des générateurs de gaz, suivant les phases de vol et/ou les caractéristiques du flux d'air entrant dans les entrées d'air 4a, 4b.

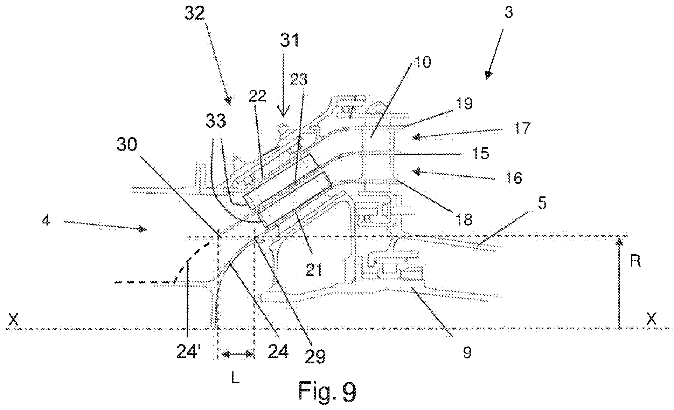

En cas de perte accidentelle de l'un des générateurs de gaz, une méthode pour passer, sur un tel aéronef, en fonctionnement de la turbomachine avec un seul générateur de gaz peut comporter une première étape de mise en position rapide mais progressive de l'angle de calage des aubes de distributeurs 33 à sa position maximale. Cela permet d'adapter rapidement mais progressivement le débit dans la turbine de puissance 3 à l'unique générateur de gaz en fonctionnement car les moyens d'asservissement peuvent contrôler la variation de section de passage des gaz pour éviter un pompage ou une extinction, du générateur de gaz rescapé. Cela se fait sans déplacer la pièce de révolution 24 mobile. La fin de cette étape peut correspondre par exemple à une première position des aubes de distributeur 33 représentée sur la figure 9.

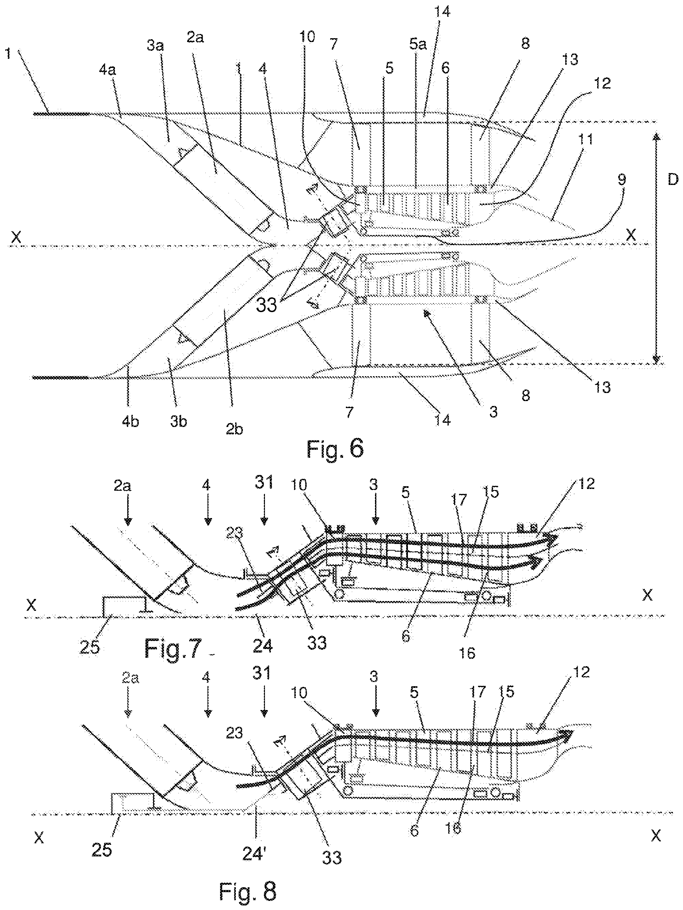

Ensuite dans une seconde étape, la pièce 24 mobile est déplacée vers l'avant, en position 24', pour fermer l'entrée d'écoulement primaire dans la veine interne 16 tout en faisant tourner les aubes de distributeur 33 pour les faire revenir à un angle de calage faible et, ainsi, maintenir le débit adapté au fonctionnement dudit générateur de gaz dans la turbine de puissance 3. La fin de cette deuxième étape peut correspondre à la position des aubes de distributeur 33 représentée sur la figure 8, avec un faible angle de calage pour minimiser les perturbations du flux de gaz primaire passant dans la seule veine externe 17. Dans une variante de réalisation, la variation de calage des aubes du distributeur 33 peut être faite individuellement. Cela permet de gérer une distorsion locale ou circonférentielle du flux entrant dans la turbine de puissance 3. Le problème se pose particulièrement dans ce moteur ou dans le cas d'une extinction d'un générateur de gaz on aura une forte disparité azimutale du flux entrant dans la turbine de puissance.

La succession de ces deux étapes permet de lisser les variations de débit pendant la phase transitoire pour permettre au générateur de gaz restant en service de s'adapter, et d'aboutir à une configuration où la turbine de puissance 3 travaille de manière optimale.

L'invention a été présentée dans le cas de deux générateurs de gaz. Dans le cas, non représenté de plusieurs générateurs de gaz, par exemple trois, une variante de l'invention consiste à modifier la répartition des sections de passage entre les veines interne 16 et externe 17 de la turbine de puissance 3, de manière à ce que la section de passage restante lorsque la veine interne 16 est occultée corresponde au débit du nombre de générateurs de gaz moins un. Dans le cas de trois générateurs de gaz, les rapports des sections de passage par rapport à la section de passage globale sont respectivement de un tiers et deux tiers, pour la veine interne 16 et pour la veine externe 17. Dans ce cas, la virole intermédiaire 23 sur les bras structuraux en entrée de la turbine est rapprochée en conséquence de la virole interne 21 et la distance axiale L de son bord amont 30 au bord amont 29 de la virole interne 21 est diminué d'autant. Pour occulter la veine interne, la pièce 24 mobile, tronconique, doit donc se déplacer d'une distance moindre mais le principe de fonctionnement de cette variante reste identique au précédent.

Les deux variantes peuvent fonctionner avec plus de deux générateurs de gaz. En particulier, dans le cas de trois générateurs, la deuxième variante peut fonctionner si deux générateurs de gaz s'arrêtent, elle permet une chute de la vitesse du flux dans la veine extérieure 16 qui est moins importante qu'avec l'art antérieur et donc diminue la perte de puissance.

Dans le cas de trois générateurs, on peut généraliser la troisième variante en considérant la turbine fonctionnant avec deux générateurs de gaz et la veine extérieure 16 et en lui appliquant la variante de l'invention prévue pour deux générateurs, c'est-à-dire en subdivisant la veine extérieure en deux veine concentriques.

Enfin, la configuration des aubes à calage variable du distributeur 33, quant à elle, peut rester la même dans cette variante. En cas d'extinction d'un générateur de gaz, la méthode de pilotage de la turbomachine reste sensiblement la même que dans le cas précédent, ce seront les lois de variation temporelle du calage des aubes du distributeur 33 et les bornes des amplitudes du calage qui seront adaptées. En particulier, l'amplitude maximale du calage des aubes du distributeur est de préférence adaptée pour permettre une diminution de la section de passage du flux primaire sensiblement égale à la diminution de section de passage correspondant à la fermeture de la veine occultable.

## Revendications

1. Aéronef propulsé par une turbomachine à soufflantes contrarotatives (7, 8), la turbomachine étant intégrée à l'arrière d'un fuselage (1) de l'aéronef, dans le prolongement de celui-ci et comprenant au moins deux générateurs de gaz (2a, 2b) qui alimentent, par une veine centrale (4) commune, une turbine de puissance (3), ladite turbine (3) comportant deux rotors contrarotatifs (5, 6) pour entraîner deux soufflantes (7,8) disposées en aval des générateurs de gaz (2a, 2b), aéronef **caractérisé en ce qu'**il comporte des moyens (15) agencés pour séparer le flux de gaz dans la turbine de puissance (3) en au moins deux veines (16, 17) concentriques et un dispositif comprenant des premiers moyens de distribution (31) du flux de gaz entre ces au moins deux veines (16, 17) à partir de la veine centrale (4), lesdits premiers moyens de distribution (31) étant configurés pour pouvoir ouvrir ou fermer l'alimentation d'au moins une première veine (16), dite veine occultable, parmi les au moins deux veines concentriques (16, 17) de la turbine de puissance (3).

2. Aéronef selon la revendication précédente, **caractérisé en ce que** chaque rotor (5, 6) de la turbine de puissance (3) comporte au moins une couronne d'aubes, les moyens de séparation du flux en veines concentriques (16, 17) comportent des nageoires (15) s'étendant circonférentiellement entre les aubes de chaque couronne, à un rayon intermédiaire entre les extrémités radiales de ces aubes.

3. Aéronef selon l'une quelconque des revendications précédentes, **caractérisé en ce que** la veine concentrique radialement la plus interne des au moins deux veines concentriques dans la turbine de puissance est la veine occultable.

4. Aéronef selon l'une des revendications précédentes, **caractérisé en ce que** ladite au moins une veine occultable (16) comprend une ouverture d'entrée dans la veine centrale (4) définie entre deux bords (29, 30) définis sensiblement par une même courbe autour d'un axe (XX) de la turbomachine et décalés suivant ledit axe.

5. Aéronef selon la revendication précédente, **caractérisé en ce que** les premiers moyens de distribution comportent une pièce (24) mobile en translation suivant l'axe de la turbomachine, et sont configurés de telle sorte que ladite pièce ouvre (24) ou ferme (24') la section d'entrée (29, 30) de ladite au moins une veine occultable (16) de la turbine de puissance (3) suivant sa position en translation.

6. Aéronef selon l'une quelconque des revendications précédentes, **caractérisé en ce qu'**il comporte des moyens (26) configurés pour alimenter avec un flux d'air de ventilation (Fv) ladite au moins une veine occultable (16) de la turbine de puissance (3) lorsque son alimentation en gaz par la veine centrale (4) est fermée.

7. Aéronef selon la revendication précédente, **caractérisé en ce qu'**il comporte des moyens (27) configurés pour fermer la sortie de ladite au moins une veine occultable (16) de la turbine de puissance (3) lorsque son alimentation en gaz par la veine centrale (4) est fermée.

8. Aéronef selon la revendication précédente, **caractérisé en ce que** le pilotage des moyens de fermeture (27) en sortie de ladite au moins une veine occultable (16) est fonction de la différence entre une force de rappel élastique et une pression des gaz en sortie de ladite au moins une veine occultable.

9. Aéronef selon la revendication précédente, **caractérisé en ce que** des bras de soutien (12) d'un carter aval (13), tournant avec un rotor (6) de la turbine de puissance (3), sont répartis en couronne à la sortie de ladite turbine, lesdits bras de soutien (12) supportant lesdits moyens de fermeture (27).

10. Aéronef selon la revendication précédente, **caractérisé en ce que** lesdits moyens de fermeture (27) comportent des lames souples (28), chacune étant fixée à un bras de soutien (12) dans la zone du bord d'attaque (12a) et s'étendant dans la direction circonférentielle jusqu'à un bras de soutien (12') voisin lorsqu'aucune force ne s'exerce dessus suivant une direction provenant de ladite au moins une veine occultable (16).

11. Aéronef selon l'une quelconque des revendications précédentes, **caractérisé en ce que** le dispositif comprend des deuxième moyens de distribution (32) comportant une couronne d'aubes de stator (33), sensiblement radiales, à calage variable.

12. Aéronef selon la revendication précédente, **caractérisé en ce qu'**il comporte des moyens d'asservissement des deuxièmes moyens de distribution (32) configurés pour faire varier la section de passage en fonction des conditions d'entrée du ou des générateurs de gaz (2a, 2b) en fonctionnement.

13. Aéronef selon la revendication 11, caractérisé en ce les deuxièmes moyens de distribution (32) sont agencés pour faire varier la section de passage du flux des gaz jusqu'à une valeur minimale sensiblement égale ou inférieure à la section de passage dans une deuxième veine (17) des au moins deux veines concentriques.

14. Aéronef selon l'une quelconque des revendications 11 à 13, **caractérisé en ce que** les deuxièmes moyens de distribution (32) sont situés en aval des premiers moyens de distribution (31) suivant l'écoulement des gaz.

15. Aéronef selon la revendication 13 ou la revendication 14 en combinaison avec la revendication 13, **caractérisé en ce que** la première veine (16) des au moins deux veines concentriques est radialement interne par rapport à la deuxième veine (17).

16. Procédé de gestion de panne d'une turbomachine d'un aéronef, pour le passage d'un fonctionnement avec deux générateurs de gaz (2a, 2b) à un seul, selon l'une quelconque des revendications 11 à 15 comprenant:
- une étape a) de fermeture, de préférence rapide mais progressive, des deuxièmes moyens de distribution (32), de manière à adapter le débit dans la turbine de puissance à l'unique générateur de gaz en fonctionnement, et
- une étape b) consistant à fermer les premiers moyens de distribution (31) tout en ré-ouvrant les deuxièmes moyens de distribution (32), de manière à faire fonctionner la turbine de puissance (3) avec une seule veine (17) concentrique tout en maintenant le débit adapté au fonctionnement d'un seul générateur de gaz.

17. Procédé de pilotage d'une turbomachine d'un aéronef selon l'une quelconque des revendications 11 à 15, **caractérisé en ce que** la position des deuxièmes moyens de distribution (32) est pilotée en fonction de paramètres influençant l'opérabilité des compresseurs basse pression des générateurs de gaz (2a, 2b).

## Patentansprüche

1. Luftfahrzeug, das von einem Turbinenmotor mit gegenläufigen Gebläsen (7, 8) angetrieben wird, wobei der Turbinenmotor an dem Heck eines Rumpfs (1) des Luftfahrzeugs in dessen Verlängerung integriert ist und mindestens zwei Gasgeneratoren (2a, 2b) umfasst, die durch einen gemeinsamen zentralen Strom (4) eine Leistungsturbine (3) versorgen, wobei die Turbine (3) zwei gegenläufige Rotoren (5, 6) beinhaltet, um zwei Gebläse (7,8) anzutreiben, die stromabwärts der Gasgeneratoren (2a, 2b) angeordnet sind, wobei Luftfahrzeug **dadurch gekennzeichnet ist, dass** es Mittel (15) beinhaltet, die eingerichtet sind, um den Gasfluss in der Leistungsturbine (3) in mindestens zwei konzentrische Ströme (16, 17) zu trennen, und eine Vorrichtung, die erste Verteilungsmittel (31) des Gasflusses auf diese mindestens zwei Ströme (16, 17) ausgehend von dem zentralen Strom (4) umfasst, wobei die ersten Verteilungsmittel (31) konfiguriert sind, um die Versorgung mindestens eines ersten Stroms (16), der abdeckbarer Strom genannt wird, der mindestens zwei konzentrischen Ströme (16, 17) der Leistungsturbine (3) öffnen oder schließen zu können.

2. Luftfahrzeug nach dem vorstehenden Anspruch, **dadurch gekennzeichnet, dass** jeder Rotor (5, 6) der Leistungsturbine (3) mindestens einen Schaufelkranz beinhaltet, wobei die Mittel zum Trennen des Flusses in konzentrische Ströme (16, 17) Flossen (15) beinhalten, die sich umfänglich zwischen den Schaufeln jedes Kranzes zu einem Zwischenradius zwischen den radialen Enden dieser Schaufeln erstrecken.

3. Luftfahrzeug nach einem der vorstehenden Ansprüche, **dadurch gekennzeichnet, dass** der radial innerste konzentrische Strom der mindestens zwei konzentrischen Ströme in der Leistungsturbine der abdeckbare Strom ist.

4. Luftfahrzeug nach einem der vorstehenden Ansprüche, **dadurch gekennzeichnet, dass** der mindestens eine abdeckbare Strom (16) eine Eingangsöffnung in den zentralen Strom (4) umfasst, die zwischen zwei Rändern (29, 30) definiert ist, die im Wesentlichen von einer selben Kurve um eine Achse (XX) des Turbinenmotors definiert und entlang der Achse versetzt sind.

5. Luftfahrzeug nach dem vorstehenden Anspruch, **dadurch gekennzeichnet, dass** die ersten Verteilungsmittel ein Teil (24) umfassen, das entlang der Achse des Turbinenmotors translationsbeweglich ist, und derart konfiguriert sind, dass das Teil den Eingangsquerschnitt (29, 30) des mindestens einen abdeckbaren Stroms (16) der Leistungsturbine (3) entlang seiner Translationsposition öffnet (24) oder schließt (24').

6. Luftfahrzeug nach einem der vorstehenden Ansprüche, **dadurch gekennzeichnet, dass** es Mittel (26) beinhaltet, die konfiguriert sind, um den mindestens einen abdeckbaren Strom (16) der Leistungsturbine (3) mit einem Lüftungsluftfluss (Fv) zu versorgen, wenn ihre Gasversorgung durch den zentralen Strom (4) geschlossen ist.

7. Luftfahrzeug nach dem vorstehenden Anspruch, **dadurch gekennzeichnet, dass** es Mittel (27) beinhaltet, die konfiguriert sind, um den Ausgang des mindestens einen abdeckbaren Stroms (16) der Leistungsturbine (3) zu schließen, wenn ihre Gasversorgung durch den zentralen Strom (4) geschlossen ist.

8. Luftfahrzeug nach dem vorstehenden Anspruch, **dadurch gekennzeichnet, dass** das Steuern der Schließmittel (27) am Ausgang des mindestens einen abdeckbaren Stroms (16) von dem Unterschied zwischen einer elastischen Rückstellkraft und einem Druck der Gase am Ausgang des mindestens einen abdeckbaren Stroms abhängt.

9. Luftfahrzeug nach dem vorstehenden Anspruch, **dadurch gekennzeichnet, dass** Tragearme (12) eines stromabwärtigen Gehäuses (13), das mit einem Rotor (6) der Leistungsturbine (3) dreht, im Kranz am Ausgang der Turbine verteilt sind, wobei die Tragearme (12) die Schließmittel (27) tragen.

10. Luftfahrzeug nach dem vorstehenden Anspruch, **dadurch gekennzeichnet, dass** die Schließmittel (27) biegsame Lamellen (28) beinhalten, die jeweils an einem Tragearm (12) in der Zone der Angriffskante (12a) befestigt sind und sich in die Umfangsrichtung bis zu einem benachbarten Tragearm (12') erstrecken, wenn entlang einer Richtung, die von dem mindestens einen abdeckbaren Strom (16) kommt, keine Kraft darauf ausgeübt wird.

11. Luftfahrzeug nach einem der vorstehenden Ansprüche, **dadurch gekennzeichnet, dass** die Vorrichtung zweite Verteilungsmittel (32) umfasst, die einen Kranz von Statorschaufeln (33), die im Wesentlichen radial mit variabler Feststellung sind, beinhalten.

12. Luftfahrzeug nach dem vorstehenden Anspruch, **dadurch gekennzeichnet, dass** es Ansteuerungsmittel der zweiten Verteilungsmittel (32) beinhaltet, die konfiguriert sind, um den Durchgangsquerschnitt in Abhängigkeit von den Eingangsbedingungen des oder der Gasgeneratoren (2a, 2b) beim Betrieb variieren zu lassen.

13. Luftfahrzeug nach Anspruch 11, **dadurch gekennzeichnet, dass** die zweiten Verteilungsmittel (32) eingerichtet sind, um den Durchgangsquerschnitt des Gasflusses bis zu einem Mindestwert variieren zu lassen, der im Wesentlichen gleich oder kleiner ist als der Durchgangsquerschnitt in einem zweiten Strom (17) der mindestens zwei konzentrischen Ströme.

14. Luftfahrzeug nach einem der Ansprüche 11 bis 13, **dadurch gekennzeichnet, dass** die zweiten Verteilungsmittel (32) stromabwärts der ersten Verteilungsmittel (31) entlang der Strömung der Gase liegen.

15. Luftfahrzeug nach Anspruch 13 oder Anspruch 14 kombiniert mit Anspruch 13, **dadurch gekennzeichnet, dass** der erste Strom (16) der mindestens zwei konzentrischen Ströme in Bezug auf den zweiten Strom (17) radial innen liegt.

16. Verfahren zur Verwaltung einer Panne eines Turbinenmotors eines Luftfahrzeugs für das Übergehen von einem Betrieb mit zwei Gasgeneratoren (2a, 2b) auf einen einzigen nach einem der Ansprüche 11 bis 15, Folgendes umfassend:
- einen Schritt a) eines bevorzugt schnellen aber allmählichen Schließens der zweiten Verteilungsmittel (32) derart, um den Durchfluss in der Leistungsturbine auf den einzigen Gasgenerator in Betrieb anzupassen, und
- einen Schritt b), der darin besteht, die ersten Verteilungsmittel (31) zu schließen, während die zweiten Verteilungsmittel (32) so wieder geöffnet werden, um die Leistungsturbine (3) mit einem einzigen konzentrischen Strom (17) betreiben zu lassen, während der Durchfluss, der an den Betrieb eines einzigen Gasgenerators angepasst ist, aufrechterhalten wird.

17. Verfahren zum Steuern eines Turbinenmotors eines Luftfahrzeugs nach einem der Ansprüche 11 bis 15, **dadurch gekennzeichnet, dass** die Position der zweiten Verteilungsmittel (32) in Abhängigkeit von Parametern gesteuert wird, die die Betriebsfähigkeit der Niederdruckverdichter der Gasgeneratoren (2a, 2b) beeinflussen.

## Claims

1. Aircraft propelled by a turbine engine having contra-rotating fans (7, 8), the turbine engine being integrated at the rear of a fuselage (1) of the aircraft, in the continuation of the fuselage, and comprising at least two gas generators (2a, 2b) which feed a power turbine (3) through a common central flow duct (4), said turbine (3) comprising two contra-rotating rotors (5, 6) for driving two fans (7, 8) arranged downstream of the gas generators (2a, 2b), **characterized in that** the aircraft comprises separating means (15) arranged so as to separate the gas flow in the power turbine (3) into at least two concentric flow ducts (16, 17) and a device comprising first distribution means (31) for distributing the gas flow between these at least two flow ducts (16, 17) from the central flow duct (4), said first distribution means (31) being designed to be able to open or close the feed of at least one flow duct (16), referred to as the concealable flow duct, from among the at least two concentric flow ducts (16, 17) of the power turbine (3).

2. Aircraft according to the preceding claim, **characterized in that** each rotor (5, 6) of the power turbine (3) comprises at least one blade ring, the separating means for separating the flow into concentric flow ducts (16, 17) comprise fins (15) extending circumferentially between the blades of each ring, at an intermediate radius between the radial ends of these blades.

3. Aircraft according to any of the preceding claims, **characterized in that** the radially innermost concentric flow duct in the power turbine is a concealable flow duct.

4. Aircraft according to any of the preceding claims, **characterized in that** said at least one concealable flow duct (16) comprises an intake opening in the central flow duct (4), defined between two edges (29, 30) that are substantially defined by the same curve around an axis (XX) of the turbine engine and are offset along said axis.

5. Aircraft according to the preceding claim, **characterized in that** the first distribution means comprise a part (24) that is movable in translation along the axis of the turbine engine, and are designed such that said part opens (24) or closes (24') the intake cross section (29, 30) of said at least one concealable flow duct (16) of the power turbine (3) depending on its translational position.

6. Aircraft according to any of the preceding claims, **characterized in that** it comprises means (26) designed to feed a ventilation air flow (Fv) to said at least one concealable flow duct (16) of the power turbine (3) when its gas feed through the central flow duct (4) is closed.

7. Aircraft according to the preceding claim, **characterized in that** it comprises means (27) designed to close the outlet of said at least one concealable flow duct (16) of the power turbine (3) when its gas feed through the central flow duct (4) is closed.

8. Aircraft according to the preceding claim, **characterized in that** the closing means (27) for closing the outlet of said at least one concealable flow duct (16) are controlled according to the difference between a resilient restoring force and a gas pressure at the outlet of said at least one concealable flow duct.

9. Aircraft according to the preceding claim, **characterized in that** arms (12) for supporting a downstream housing (13), which rotates together with a rotor (6) of the power turbine (3), are distributed in a ring at the outlet of said turbine, said support arms (12) supporting said closure means (27).

10. Aircraft according to the preceding claim, **characterized in that** said closure means (27) comprise flexible strips (28), each being secured to a support arm (12) in the region of the leading edge (12a) and extending in the circumferential direction up to a neighbouring support arm (12') when no force is exerted thereon in a direction originating from said at least one concealable flow duct (16).

11. Aircraft according to any of the preceding claims, **characterized in that** the device comprises second distribution means (32) comprising a ring of substantially radial, variable-pitch stator vanes (33).

12. Aircraft according to the preceding claim, **characterized in that** it comprises means that are intended for actuating the second distribution means (32) and designed to vary the passage cross section depending on the intake conditions of the operational gas generator(s) (2a, 2b).

13. Aircraft according to claim 11, **characterized in that** the second distribution means (32) are arranged so as to vary the passage cross section for the gas flows up to a minimum value that is substantially equal to or less than the passage cross section in the second concentric flow duct (17).

14. Aircraft according to claims 11 to 13, **characterized in that** the second distribution means (32) are located downstream of the first distribution means (31) in the gas flow.

15. Aircraft according to claim 13 or claim 14 in combination with claim 13, **characterized in that** the first flow duct (16) of said concentric flow paths is radially inner in relation to the second flow duct (17).

16. Method for managing a breakdown of a turbine engine of an aircraft according to claims 11 to 15, for changing over from operation using two gas generators (2a, 2b) to operation using just one, comprising:
- a closing step a) , preferably rapidly but steadily, for closing the second distribution means (32) so as to adjust the flow in the power turbine to the single gas generator in operation, and
- a step b) consisting of closing the first distribution means (31) while re-opening the second distribution means (32), so as to operate the power turbine (3) using a single concentric flow duct (17) while maintaining the flow adapted to operation of a single gas generator.

17. Method for controlling a turbine engine of an aircraft according to any of claims 1 to 15, **characterized in that** the position of the second distribution means (32) is controlled according to parameters influencing the operating ability of the low-pressure compressors of the gas generators (2a, 2b).
